# EUROPEAN PATENT SPECIFICATION

(11) **EP 0 833 289 B1**
(45) Date of publication and mention of the grant of the patent: **15.06.2005**
(21) Application number: 97115932.2
(22) Date of filing: 12.09.1997
(51) Int. Cl.: G08G 1/0968, G06F 9/44

(54) **Navigation system and information medium for the navigation system**
Navigationssystem und Speichermedium dafür
Système de navigation et support d'information pour le système de navigation

(30) Priority: 26.09.1996 JP 25467896
(43) Date of publication of application: 01.04.1998
(73) Proprietor: Hitachi, Ltd., Tokyo 100-8280 (JP)
(72) Inventor: Naya, Hidemitsu, Hitachi-shi, Ibaraki 316 (JP); Fukunaga, Yasushi, Hitachi-shi, Ibaraki 316 (JP); Nakamura, Kozo, Hitachioota-shi, Ibaraki 313 (JP)
(74) Representative: Beetz & Partner Patentanwälte

(56) References cited:
- EP-A- 0 618 531
- CANNON G L ET AL: "DOWNLOADABLE PAGER FUNCTIONALITY" MOTOROLA TECHNICAL DEVELOPMENTS, vol. 18, 1 March 1993, pages 91-93, XP000349572
- PATENT ABSTRACTS OF JAPAN vol. 016, no. 252 (P-1367), 9 June 1992 & JP 04 060415 A (OKI SHISUTETSUKU:KK;OTHERS: 01), 26 February 1992,

## Description

### FIELD OF THE INVENTION

The present invention relates to a navigation system which provides a traffic information for a moving body such as a motor vehicle, and to an information medium used for the navigation system. The term "traffic information" is used in the present specification as a generic term for identifying a variety of information relating to such as a map information, a position information of the moving body and a road condition information including a traffic jam.

### BACKGROUND OF THE INVENTION

Navigation devices for a moving body which were reduced into practice until now include such as an information processing unit and a display mounted on the moving body, process a map information stored in a large capacity memmory medium such as a CD-ROM and a position information obtained from such as a GPS (Global Positioning System) satellite, an earth magnetism sensor and a gyroscope, and display a current position of the moving body together with a map information on the display while graphically expanding the same.

Further, a technical means, which receives a road condition information such as a traffic jam by making use of such as a beacon and displays the same together with a map information and a position information, has been proposed.

An application program for processing a traffic information such as a map information and a position information is either loaded in advance in a ROM of an information processing unit mounted on a moving body or stored in a distributable external memory such as a CD-ROM together with a map information which is designed to permit reading-in from the ROM or the CD-ROM into an internal memory of the information processing unit as disclosed, for example, in JP-A-4-60415.

Cannon et al discloses in Motorola Technical Developments, vol. 18, March 1993, US (XP 000349572), "Downloadable Pager Functionality" an improvement in computer peripherals in which the program of a pager is updated by downloaded modules. For this purpose an interpreter is provided which converts the downloaded module only into executable program code.

Further, JP-A-6-301547 corresponding to EP 0 618 531 A discloses to use an apparatus subjected to a processor control as a moving telecommunication apparatus, in that a vehicle mounted apparatus, to transmit a control program therefore to the vehicle mounted apparatus via a telecommunication means, for example, a traffic information transmitting beacon, and to load the same in a memory on the vehicle mounted apparatus, in that discloses a method of newly loading or reloading a processor control program. This program loading method permits a program modification and supplementing without necessitating an exchange of a program memory element such as a ROM.

When a format of such as a map information stored in a large capacity memory medium such as a CD-ROM in a navigation device for a moving body is modified and/or supplemented, a revision of an application program namely a so called version-up is required correspondingly.

This version-up is generally carried out either by exchanging a program memory element such as a ROM where the application program was loaded or by reloading the application program into an internal memory of the moving body navigation device via an information medium such as a CD-ROM and an IC card where the version-uped application program is stored so as to eliminate a troublesome of exchanging a ROM.

Further, when a format of a road traffic information provided from an external stationary station to a moving body via a wireless telecommunication such as a beacon varies for every areas, a corresponding modification of an application program is required, and if the required modification of such application program is performed in the like manner as with the version-uped application program as explained above, an exchange of the entire application program has to be carried out either by exchanging a ROM or by reloading the entire version-uped application program into the internal memory of the navigation device via a memory medium such as a CD-ROM and an IC card.

The above explained exchange of a ROM requires a troublesome exchange work, and on the other hand, the reloading method causes a cost and time for the program exchange, because the reloading has to be carried out after the entire application program has been exchanged. Moreover, since an application program possesses a device type dependency, in that the specification of the application program varies dependent on respective manufacturers of the navigation devices, there sometimes arise limitations that services such as a traffic information and a variety of information belonging thereto, for example a sightseeing information and an accommodation information can not be enjoyed if the type of the navigation device or the manufacturer thereof is different.

Further, when an application program is loaded by making use of an external memory such as a CD-ROM, everytime when the navigation device is started, the CD-ROM has to be set in a disk driver and the application program therein has to be read in.

On the other hand, when the navigation system as disclosed in JP-A-6-301547 is used in which a control program is transmitted from an external stationary station to a moving body via a wireless telecommunication, no exchange of the ROM and the CD-ROM is required for the modification of the application program, and a traffic information and an application program therefor suitable for every areas are provided for the moving body from external stationary stations of respective areas via a wireless telecommunication.

However, even with the above method the application program varies depending on the hard ware, the navigation device, in that shows a device type dependency, therefore, the application program is incompatible with a different type of navigation device, further the application program has to be read-in every time when the navigation device is restarted, and still further, when the application program is modified, the entire application program has to be exchanged which incurs time and cost.

Therefore, the above explained conventional navigation system could not respond quickly such as to a specification modification and a service item alternation of an information intended to be provided by the navigation system.

### SUMMARY OF THE INVENTION

The present invention has been completed in view of the above problems and one object of the present invention is to realize a navigation system in which, when a traffic information and/or an information belonging thereto is modified and/or supplemented and a revision of an application program which is necessary for processing the information is necessitated, the revision is carried out simply and easily with a low cost, and a quick starting up of the application program during the start thereof is acheived.

Another object of the present invention, in addition to the first object above, is to realize a navigation system which can provide a variety of traffic information and/or information belonging thereto while eliminating a device type dependency and improves services of an information supply.

The present invention is primarily constituted as follows.

One aspect of the present invention proposes a navigation system according to claim 1.

Further, as a navigation use information medium used for the navigation system with the above first aspect of the present invention, an information medium is proposed according to claim 6.

Functions of the first aspect of the present invention are as follows ; when a format of a traffic information, which is an object of processing for navigation, for example a map information, a position information and a road condition information such as a traffic jam and/or an information belonging thereto, for example a sightseeing information and an accommodation information, is modified and/or supplemented, and correspondingly a revision of the application program for the information processing unit mounted on the moving body is necessitated, such revision is executed in the following maner, namely, when the program part, in that a partial program which is necessary for processing the modification and/or supplementing information is provided for the information processing unit on the moving body via the information medium, the program part is replaced and/or supplemented for the portion concerned of an already existing application program stored in the information processing unit, and only with this operation the revision of the application program is completed.

As an example, there is proposed a navigation system including an information processing unit and a display mounted on a moving body for displaying a traffic information such as a map information and a position information of the moving body on the display characterized, in that at least one format of the traffic information and a variety of information belonging thereto to be inputted to the information processing unit is standardized between different types of navigation systems, and a first application program for processing the information written in the standardized format is loaded with an intermediate code being common between the different types of navigation systems, and in that the navigation system comprises a first means which reads in the first application program written in the intermediate code, converts the first application program into a second application program inherent to the navigation system and executes the second application program and a second means which partially exchanges and supplements the first application program written in the intermediate code via an information medium.

Further, an information medium used for the above navigation system is proposed which, in addition to a content relating to a partial modification and supplementing of at least one format of a traffic information and an information belonging thereto written in a standardized format between different types of navigation devices, is constituted to be simultaneously provideable of a partial application program written in an intermediate code common between the different types of navigation devices serving as a program part which is necessary for processing the modification and supplementing information.

Functions of said example are as follows ; in that, when a format of a traffic information and a variety of information belonging thereto which are inputted in the information processing unit on the moving body is standardized, an information of same content can be broadly provided for different types of navigation devices.

In this instance, when providing the application program necessary for processing the information with the standardized format via the information medium, the application program is written in an intermediate code common between different types of navigation devices, the traffic information and a variety of information belonging thereto having a standardized format as well as the application program necessary for processing the same in a form of an intermediate code can be broadly provided for different types of navigation devices of which application programs show a hard ware dependency.

Since the application program is loaded in the intermediate code, when using the application program, it is necessary to read-in the intermediate code and to convert the same into an application program inherent to the specific navigation device. Thereby, an execution of the application program within the specific navigation device is enabled.

Further, like the first aspect of the present invention, the revision of the application program in association with the modification and supplementing of such as the traffic information is carried out only by providing the program part to the information processing unit on the moving body, in that only by replacing and/or supplementing a part of an already existing application program, however, the program part in the form of an intermediate code is partially replaced and/or supplemented for the already loaded application program in the form of an intermediate code. For this reason, a modification and supplementing information which modifies and supplements a part of the traffic information and/or a variety of informating belonging thereto having a standardized format as well as the program part in the form of an intermediate code necessary for processing the information can be broadly provided for different types of navigation devices by making use of the common information medium.

### BRIEF DESCRIPTION OF THE DRAWINGS

Figs.1A and 1B are explanatory diagrams showing a principle according to the present invention ;
Figs.2A and 2B are schematic diagrams of a conventioal navigation system ;
Fig.3 is a schematic diagram showing a structure of a part of a navigation device which is mounted on a moving body among a navigation system according to the present invention ;
Fig.4 is an explanatory diagram showing an exemplary hard ware structure of a processing unit used in Fig.3 ;
Fig.5 is a diagram for explaining functions of the processing unit ;
Fig.6 is an explanatory diagram showing an exemplary structure of an application program converter unit used in an embodiment according to the present invention ;
Fig.7 is an explanatory diagram showing steps for executing an application program in the converter unit ;
Fig.8 is an explanatry diagram showing an exemplary structure of an application program used for a navigation system according to the present embodiment ;
Fig.9 is an explanatory diagram showing an exemplary structure of an application program executed in a second embodiment according to the present invention ;
Fig.10 is a diagram for explaining a neighboring information used in the second embodiment ;
Fig.11 is an explanatory diagram showing a condition where the navigation system of the second embodiment is connected to an internet via a stationary station ; and
Fig.12 is an explanatory diagram of a further specific navigation system shown in Fig.11.

### DETAILED DESCRIPTION OF THE PREFERRED EMBODIMENT

Embodiments according to the present invention are explained with reference to the drawings.

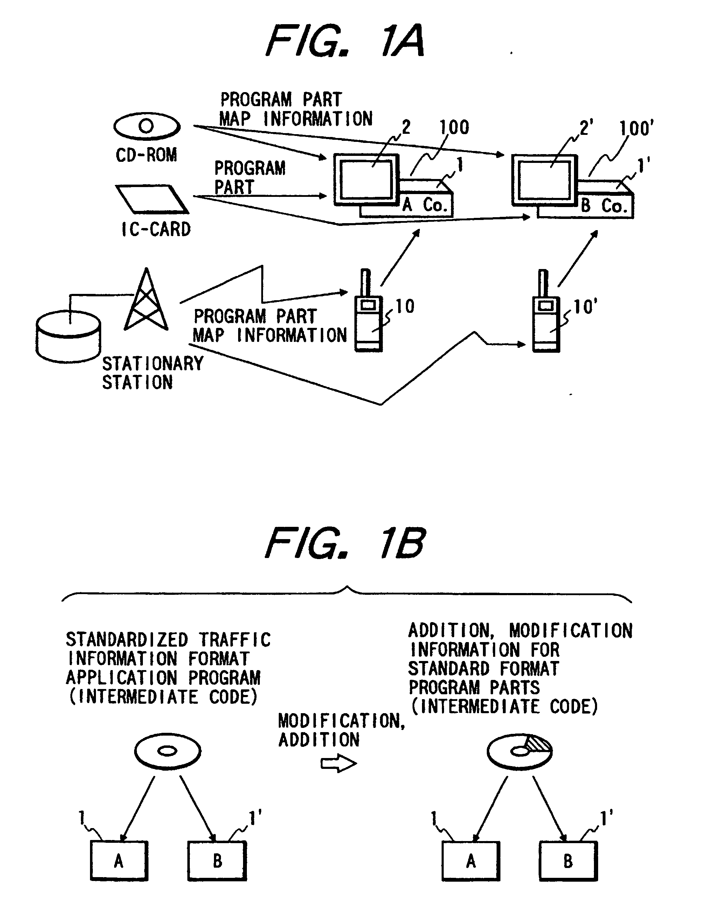

Figs.1A and 1B are diagrams showing a principle of the present invention, wherein Fig.1A is a schematic diagram of a navigation system representing an embodiment according to the present invention, and Fig.1B is a diagram for explaining an example of distribution process of an information medium used for the navigation system.

In Figs.1A and 1B, numeral 100 is an A company made navigation device mounted on a moving body, herein a vehicle mounted apparatus namely a car navigation device is exemplified, numeral 100' is a B company made navigation device mounted on another moving body, in that different types of navigation devices of which respective application programs show a hard ware dependency are exemplified, and each is constituted by an information processing unit 1, 1' and a display 2, 2'.

A CD-ROM, an IC card and a wireless telecommunication transmitted from an external stationary station are exemplified as an information medium which provides for the navigation devices 100 and 100' a traffic information, for example, a map information and a road condition information such as a traffic jam and an information belonging thereto, for example, a sightseeing information and an accommodation information as well as an application program necessary for processing the information.

Numerals 10 and 10' are telecommunication units or transmitter and receiver units which receive information transmitted from an external stationary station and are mounted on respective moving bodies.

In the present embodiment, a format of the traffic information, for example, a display method of a map information and a display method of a position information, and a format of a variety of information belonging thereto, for example, items of service information relating to sightseeing and accommodation, are standardized between different types of devices 100 and 100' and further, although the respective final application programs for processing the information show a device type dependency, the information medium is prepared according to a common specification of an intermediate code which is illustrated in the left side of Fig.1B, in which an information medium of CD-ROM is exemplified and A and B compary made information processing units 1 and 1' for respective navigation systems are exemplified.

The application program is loaded into the information processing units 1 and 1' under a condition of intermediate code. The loading is effected on a stationary storage unit such as a ROM in the information processing unit, however, when a revision, in other words writing in, of the application program is necessary, the stationary storage unit is set to release the writing in inhibition. Further, the information processing unit 1, 1' includes means for replacing and supplementing partly as a program part of the application program in a form of an intermediate code via the information medium and the replacing and supplementing means is constituted by an operating system in the unit.

Each of the respective information processing units 1 and 1' on the moving bodies includes means for reading in the application program in a form of an intermediate code, converting the same into an application program inherent to the specific device so as to permit activation thereof and executing the converted application program, and the reading, converting and the executing means is also constituted by an operation system in the unit.

When a modification and supplementing of a format of the traffic information and the information belonging thereto occurs and the revision of the application program corresponding to the modification and supplementing can be fully performed by a partial replacement and supplementing of an already existing application program, the new information such as modification and/or supplementing information together with a part of an application program serving as a program part necessary for processing the new information are provided for the information processing units 1 and 1' via the information medium, in that via one of such as a CD-ROM, an IC card and a telecommunication.

A and B company made application programs respectively show a device type dependency, namely the specifications thereof are inherent to the respective manufacturers, therefore, if no measures are provided for the program part, the program part can not be provided together with such as the traffic information having a standerdized format by making use of a common information medium.

Accordingly, the program part at the stage of an information medium is formed according to a specification of an intermediate code which shows no device type dependency, and further after receiving the program part in an intermediate code, the respective information processing units 1 and 1' convert the received program part into respective formats which depend on the respective device types. In the right side of Fig.1B, the blank portion of a CD-ROM serving as the information medium schematically represents the modification and supplementing information of such as the traffic information having a standardized format, and the hatched portion thereof schematically represents the program part in an intermediate code for processing the information.

In the present embodiment, such as the traffic information is loaded in a standardized format and the application program is loaded in an intermediate code, however, the present invention is not limited thereto. Instead thereof, if a stored application program partially replaced and/or supplemented via an information medium, the program replacing and/or supplementing is performed simply and easly with a resultant low cost.

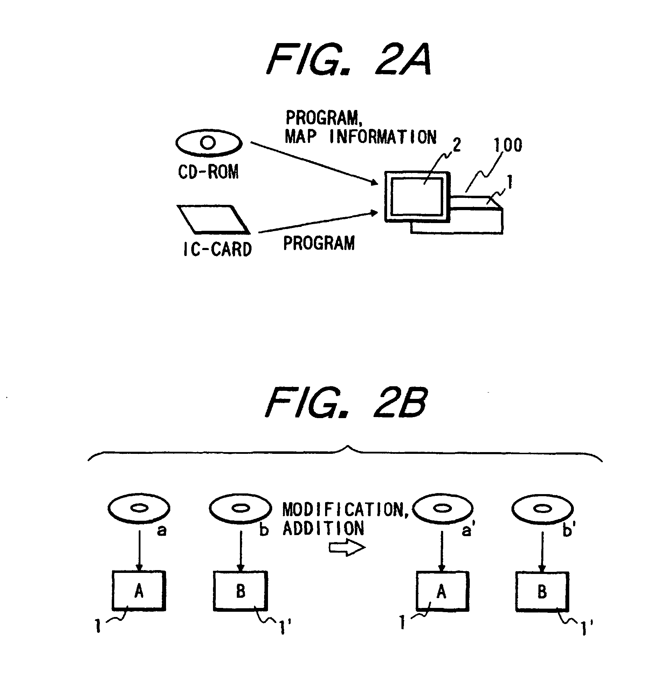

Figs.2A and 2B show a conventional navigation system as a comparison example.

Fig.2A is a conventional navigation system in which such as a manufacturing company spacific non-standardized traffic information and application program are provided to the navigation device 100 via an information medium. For example, as illustrated at the left side of Fig.2B, when using a CD-ROM as the information medium, the informations to be recorded on the CD-ROM as represented by symbols a and b are different by company by company, in that company A and company B, and respective application programs for processing these informations also possess respective device type dependencies, accordingly there are no compatibility between A company device and B company device. Further, when the information is modified and/or supplemented, all of the traffic information and/or the application program related thereto has to be replaced through a version-up while remaining the respective device type dependency, therefore, more cost and time for replacing the information and the application program relating thereto are incurred in comparison with the present invention.

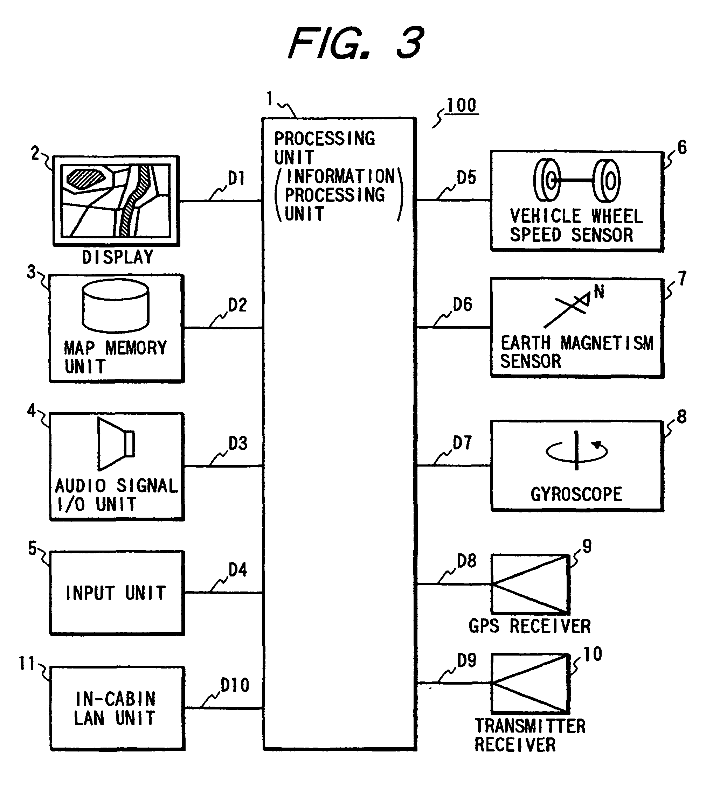

A structure of the navigation device 100 mounted on the moving body in the navigation system representing the one embodiment and illustrated in Figs.1A and 1B is explained with reference to Figs.3 through 8.

As illustrated in Fig.3, the navigation device 100 includes a processing unit or an information processing unit 1 performing a major operation of information processing, and periphery units thereof such as a display 2, a map memory unit 3, an audio signal I/O unit 4, an input unit 5, a vehicle wheel speed sensor 6, an earth magnetism sensor 7, a gyroscope 8, a GPS receiver unit 9, a transmitter and receiver unit 10 and an in-cabin LAN unit 11.

The processing unit 1, which is a major unit, calculates a current position of the moving body based on a variety of information such as distance pulse data D5, magnetic declination detection data D6, angular acceleration data D7 and position data D8 outputted respectively from the vehicle wheel speed sensor 6, the earth magnetism sensor 7, the gyroscope 8 and the GPS receiver unit 9, reads in a map information from the map memory unit 3 which is necessary for displaying on the display 2 according to the obtained current position information as well as performs a variety of processings such as graphically expanding the map data, displaying on the display 2 while superposing a mark indicating the current position on the expanded map data, selecting an optimum route connecting a destination instructed by a user of the device and the current position, and navigating the user by making use of the audio signal I/O unit 4 and the display 2.

The display 2 is a unit for displaying a graphic information produced in the processing unit 1 and is constituted by such as a CRT and a liquid crystal display. The processing unit 1 and the display 2 are generally connected via signals D1 such as RGB signals and NTSC (National Television System Committee) signals.

The map memory unit 3 is constituted by a large capacity memory medium such as a CD-ROM and an IC card which is to be set in a map data reading out driver.

The audio signal I/O unit 4 converts message for the user produced in the processing unit 1 into audio signals and outputs the same as well as recognizes audio sounds speaked by the user and transfers the recognized contents to the processing unit 1.

The input unit 5 is a unit for receiving instructions from the user and is constituted such as by hard ware switches such as a scroll key and a contraction scale modification key, a joy stick and touch panels applied on the display 2.

The vehicle wheel speed sensor 6 determines a distance traveled from the product of circumferential length of the vehicle wheel and a measured rpm of the vehicle wheel, and further measures an angle of a curve along which the moving body ran based on an rpm difference between paired vehicle wheels.

The earth magnetism sensor 7 senses magnetic field caused by the earth and detects an orienting direction of the moving body.

The gyroscope 8 is constituted by such as an optical fiber gyroscope and a vibration type gyroscope and detects a rotation angle of the moving body.

The GPS receiver unit 9 receives signals from more than three GPS satellites and determines distances between the moving body and the GPS satellites and variation rates of the distances, and thereby determines the current position, moving direction and moving azimuth of the moving body.

The transmitter and receiver unit 10 receives a traffic information such as a traffic jam information, a traffic regulation information such as a road under construction and a road closed, and a parking information generated from a beacon receiving apparatus.

The in-cabin LAN unit 11 receives a variety of information of the motor vehicle, for example, open and close information of the doors, kinds and lighting condition of the lights, condition of the engine and result of diagnosing.

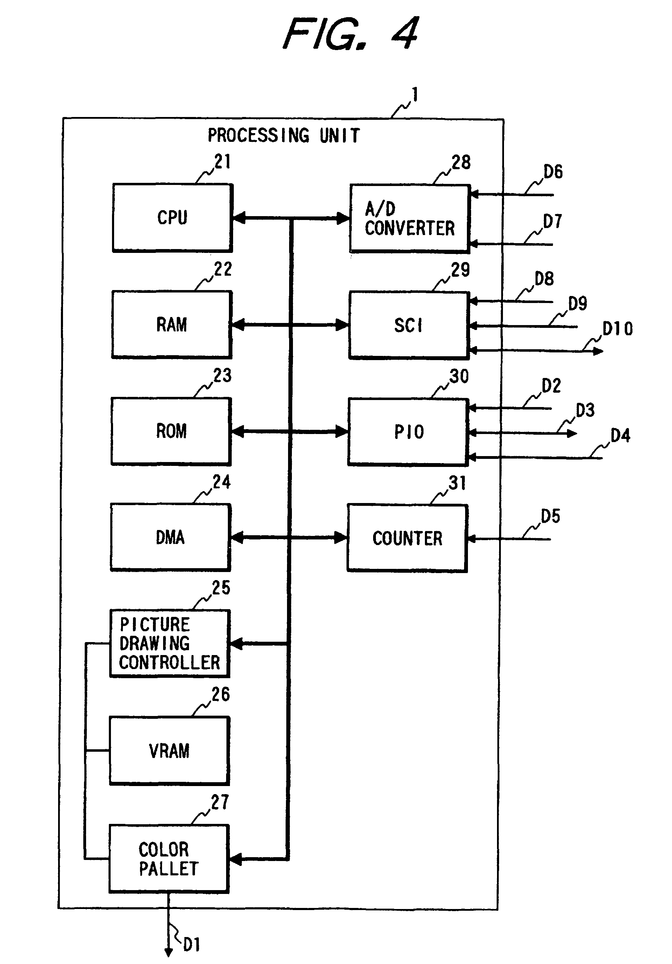

Now, a hard ware structure of the processing unit or the information processing unit 1 is explained with reference to Fig.4.

The processing unit 1 is constituted by connecting respective devices via a bus.

Among the respective devices in the processing unit 1, a CPU 21 performs a variety of processings such as arithmetic processings and controls of the respective devices. A RAM 22 stores map data called from the map memory unit 3, a large capacity memory such as a CD-ROM, and processing data.

A ROM 23 stores application programs for operation system controlling the variety of the devices and for information processing, and a variety of other data.

A DMA (Direct Memory Access) 24 performs data transfer in a high speed between memories and between memories and respective devices.

A picture drawing controller 25 expands vector data into pixel information, executs a graphic picture drawing in a high speed and performs a display control.

A VRAM 26 stores graphic image data. A color pallet 27 converts image data into RGB signals.

An A/D converter 28 converts analog signals of sensor data such as D6 and D7 obtained from such as the earth magnetism sensor 7 and the gyroscope 8 into digital signals. A SCI 29 converts serial signals of such as position data D8 from the GPS satellites and received data D9 from the transmitter and receiver unit 10 into parallel signals synchronized with the bus signals.

A PIO 30 transfers such as map data D2 from the map memory unit 3, voice data D3 from the audio signal I/O unit 4 and input data D4 from the input unit 5 onto the bus while keeping synchronization with the parallel signals.

A counter 31 integrates pulse signals of such as distance pulse data D5 from the vehicle wheel speed sensor 6.

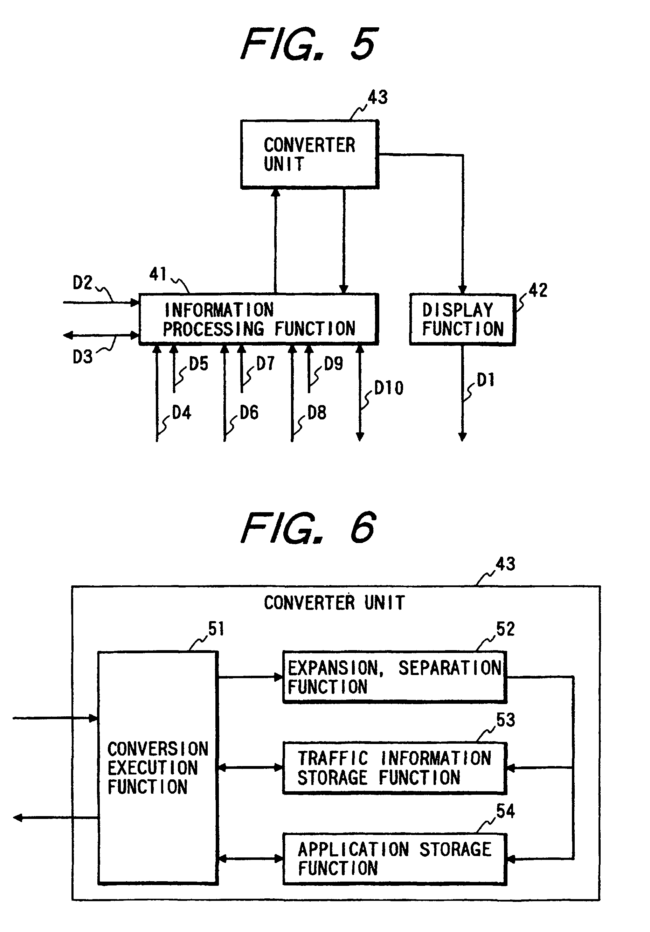

Fig.5 is a functional diagram of the processing unit 1 comprising an information processing function 41, a displaying function 42 and a converter unit 43, and these functions are realized through cooperation of the respective devices as referred to in Fig. 4 and the operation systems in the processing unit 1.

Among these functions, the information processing function 41 functions to receive and process such as the already explained map data D2, voice data D3, input data D4, distance pulse data D5, orientation detection data D6, angular acceleration data D7, position data D8, received data D9 and motor vehicle information data D10, and to output the processed results. Among the above indicated data, the received data D9 includes a traffic information and/or an information belonging thereto transmitted from a stationary station and application programs for processing these informations.

The displaying function 42 functions to control the picture drawing controller 25 and the color pallet 27 via picture drawing commands and to draw pictures on the display 2.

The converter unit 43 separates the traffic information and the application programs, among the data obtained in the information processing function 41 via the information medium, for example, a telecommunication medium which performs telecommunication with an external stationary station, a CD-ROM and an IC card, into the traffic information and the application programs, and stores the application programs in the already explained condition of an intermediate code which is common between different types of devices, therefore, when an execution is performed after reading in the application programs, the application programs in the intermediate code is converted into application programs acceptable to its own device.

Fig.6 is a diagram for explaining the function of the above converter unit 43 which includes a conversion executing function 51, expansion and separation function 52, a traffic information storage function 53 and an application program storage function 54, and these functions are primarily realized by the devices such as the CPU 21 and the ROM 23 and operation systems controlling these devices.

The conversion execution function 51 functions to convert the application programs obtained by the information processing function 41 in the condition of an intermediate code into application programs acceptable to its own device, and to execute the converted application programs.

The expansion and separation function 52 functions to expand and separate the data D9 containing the traffic information and the application programs for processing the traffic information obtained from the transmitter and receiver unit 10. The data D9 is generally compacted in order to decrease telecommunication capacity, however, if not compacted, the expansion function is eliminated. The traffic information storage function 53 stores the traffic data expanded and separated by the expansion and separation function 52, and the application program storage function 54 stores the application programs expanded and separated by the expansion and separation function 52.

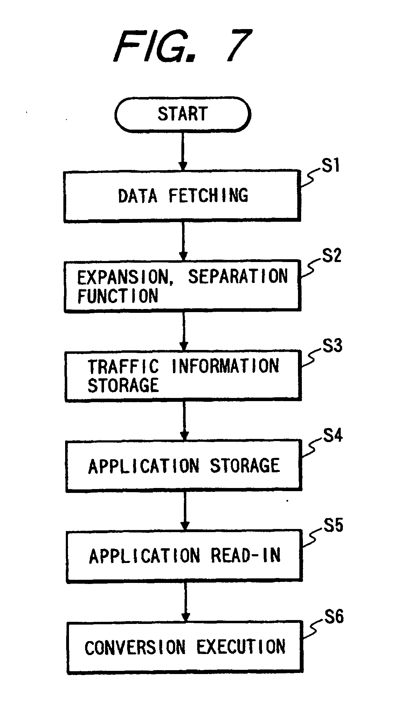

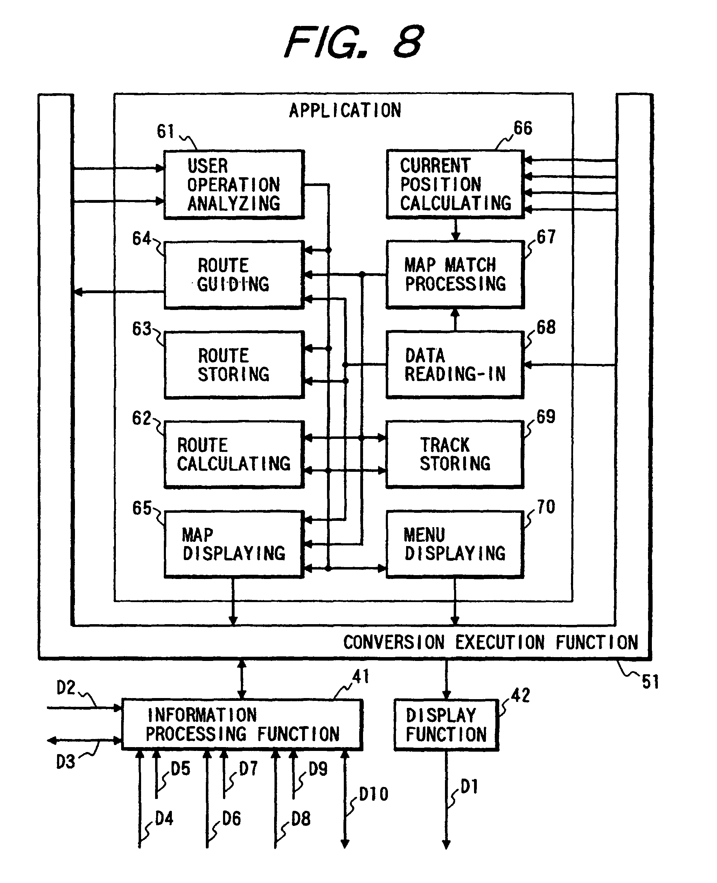

Now, the operation of the present embodiment is explained with reference to Figs.7 and 8.

As illustrated in Fig.7, the data D9 containing the traffic information and the application programs for processing the traffic information from a stationary station received by the transmitter and receiver unit 10 is fetched by the converter unit 43 via the information processing function 41 (step S1).

The fetched data D9 is separated into the traffic information and the application programs for processing the traffic information by the expansion and separation function 52 (step S2). In the present embodiment, the traffic information is prepared by making use of a standardized format and the application programs for processing the same are prepared by making use of an intermediate code. Further, when the format of the traffic information is modified and/or supplemented, the information relating to the modification and supplementing and program parts necessary for processing the same, in other words a partial program prepared in this instance in an intermediate code when a partial revision of the application program is satisfactory for the processing of the modified and/or supplemented information, are fetched as the data D9.

The separated traffic information is stored in the ROM 23 released of a write inhibition by the traffic information storage function 53 (step S3). The separated application programs are also stored in the ROM 23 in the condition of an intermediate code by the application storage function 54 (step S4). Further, in case of a program part in an intermediate code, after releasing the write inhibition of the ROM 23, a partial replacing and/or supplementing of an already existing application programs in an intermediate code are performed.

When displaying the traffic information and the information belonging thereto on the display 2 after processing the same, the conversion executing function 51 reads-in the stored application programs in an intermediate code (step S5). The conversion execution function 51 converts the read-in application programs into hard ware dependent application programs which permits control of the information processing function 41 and the displaying function 42 so as to activate its own device, and executes the converted application programs (step S6).

Fig.8 shows constitutional elements of a basic application program in the navigation system for processing such as a traffic information. In Fig.8, program contents or functions executed by the application programs are indicated by block means. The program contents include a user operation analysis means 61, a route calculating means 62, a route storing means 63, a route guiding means 64, a map displaying means 65, a current position calculating means 66, a map match processing means 67, a data reading-in means 68, a route storing means 69 and a menu displaying means 70. These means, namely application program elements are stored in a form of an intermediate code, converted into device type dependent application programs by the conversion executing function 51 and executed via the information processing function 41 and the displaying function 42.

Before explaining the above conversion contents, the operation of the basic application program is outlined.

The current position calculating means 66 performs a processing of calculating an initial position (X, Y) and a position (X', Y') after the moving body has traveled by making use of the distance data and angle data which were resultantly obtained by integrating respectively the distance pulse data D5 measured by the vehicle wheel speed sensor 6 and the angular acceleration data D7 measured by the gyroscope 8 and by integrating these data along time axis respectively.

Further, herein in order to match the relationship between the angle rotated and the traveling direction of the moving body, azimuth data D6 obtained from the earth magnetism sensor 7 and the angle data resulted from the integration of the angular acceleration data D7 obtained from the gyroscope 8 are mapped in a relationship of 1:1 and the absolute azimuth of the traveling direction of the moving body is corrected.

When continuing the integration of the data obtained from the above sensors, errors of the sensors are accumulated, therefore, at a predetermined cycle, a processing of canceling the accumulated errors is performed based on the position data D8 obtained from the GPS receiving unit 9, and a current position information is output.

Since the thus obtained current position information contains the sensor errors, a map match processing 67 is performed in order to further increase the position accuracy, in which processing road data contained in a map around the present position which was read-in by the data reading-in means 68 are compared with the traveling route obtained from the current position calculating means 66 each other and the current position is superposed onto a road exhibiting the most highest configuration corelationship.

The conversion executing function 51 converts the program elements 61 through 70 in the form of an intermediate code into device type dependent programs and executes the following program contents.

Namely, the data reading-in means 68 performs reading-in of the map data D2 from the traffic information storage means 53 and the map memory unit 3 via the information processing function 41, and the current position calculating means 66 likely performs calculation for determining the current position of the motor vehicle via the information processing function 41.

Through the application of the map match processing 67 the current position mostly matches with the current traveling road, thereby, the data reading-in means 68 and the current position calculating means 66 can output a more accurate current position information. Thus calculated current position information is stored in the route storing means 69 every time after a predetermined distance has been traveled.

Herein, the program contents of the route storing means 69 are executed via the traffic information storage function 52.

The route data are used for drawing route marks on the roads on the map corresponding to the roads traveled until now.

On the other hand, when a request from a user is received at the input unit 5, the user operation analysis means 61 analyzes the request content and controls the respective units so that the corresponding processings are executed. The program contents of the user operation analysis means 61 are performed via the information processing function 41. For example, when a user requests route navigating to a destination, in order to set the destination a processing of displaying a map is requested to the map displaying means 65, and further a processing of calculating a route from the current position to the destination is requested to the route calculating means 62.

The program contents of the map information displaying means 65 are performed via the displaying function 42.

The route calculating means 62 retrieves nodes connecting between the designated two points from the map data and determines a route showing a minimum distance between the two points, a route which can be traveled with a minimum time or a route which can be traveled with a minimum cost, and the program contents thereof are performed via the information processing function 41. The resultantly obtained routes are stored in the route storing means 63.

The route storing means 63 is performed via the traffic information storing function 52.

The route guiding means 64 compares a link information of the guiding routes stored in the route storing means 63 with the current position information determined by the current position calculating means 66 and the map match processing means 67, and informs a route to be taken to the user in such a manner such as audibly informs the user whether to advance straight or to turn right or left before passing through a specific crossing by making use of the audio signal I/O unit 4 and displays a traveling direction on the map displayed on the display 2.

The data reading-in processing means 68 reads in the map data of a requested area from the map memory unit 3 and prepares for a subsequent operation. Further, the map displaying means 65 receives the map data around the point where the display was requested from the data reading in processing means 68, and generates a picture drawing command of a designated object with a designated reduction scale, drawing azimuth and drawing method. The program contents thereof are performed via the displaying function 42.

On the other hand, the menu displaying means 70 receives commands output from the user operation analysis means 61 and produces commands of displaying various sorts of requested menus and marks superposed on the map. The program contents thereof are performed via the displaying function 42.

According to the present embodiment, (1) a traffic information and a variety of information belonging thereto of a standardized format and application programs therefor can be broadly provided of different types of navigation devices by making use of a common information medium, and further when the information is modified and/or supplemented, a new information relating to the modification and/or supplementing and a program part necessary therefor can be provided for different types of navigation devices by making use of a common information medium.

Accordingly, a traffic information and an information such as a service information belonging thereto can be broadly provided for many types of navigation devices regardless to the type differences, and services of a traffic information and an information belonging thereto are extended.

(2) Further, since a revision of an application program is achieved only by replacing and/or supplementing a soft ware part, in other words, a program part for the already existing application program via an information medium, the revision of the application program is simplified and facilitated and the time and cost therefor are reduced. Further, the already loaded revised application program can be read-in from the internal memory of the information processing unit when activating the navigation system, the time for the reading-in can be shortened.

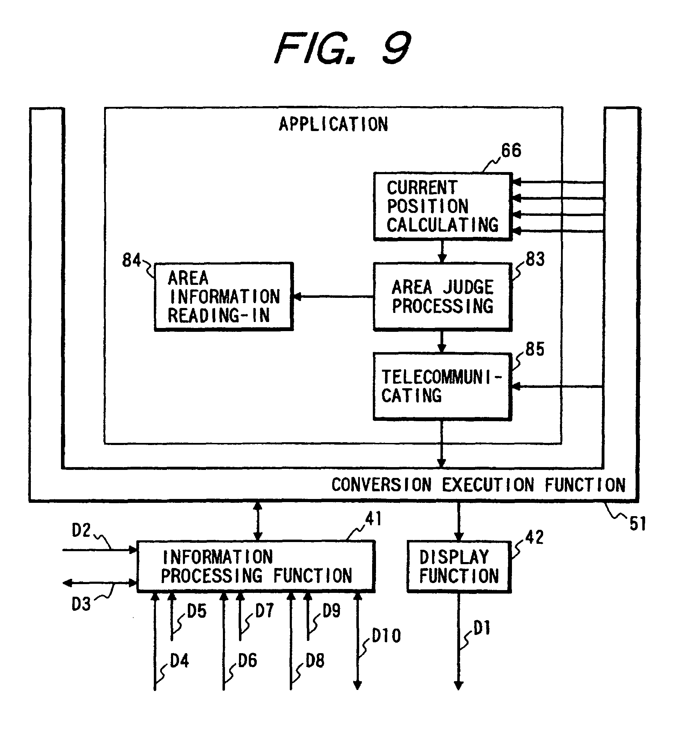

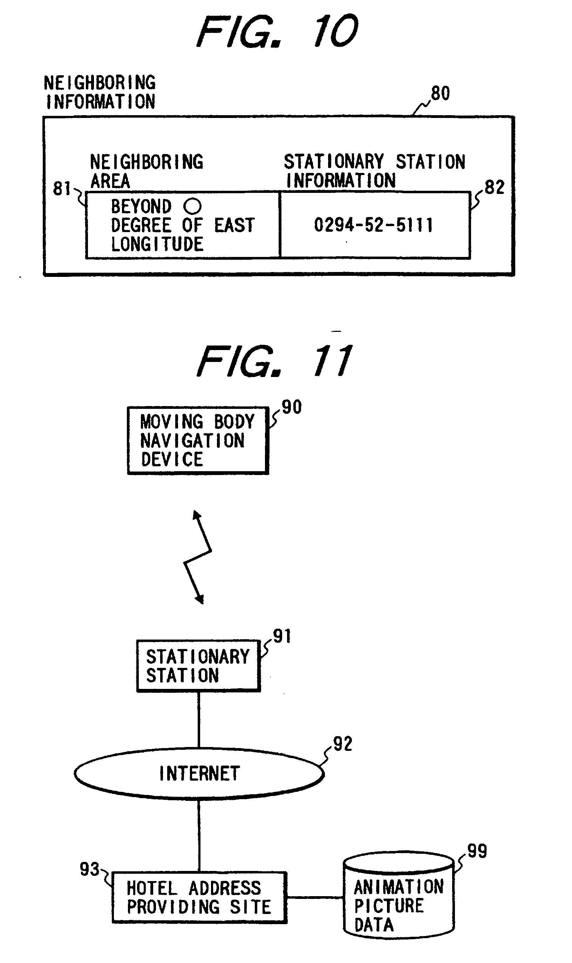

Figs.9 and 10 show a second embodiment according to the present invention. Herein, Fig.9 is a diagram for explaining a function of converting an application program prepared in a form of an intermediate code with a conversion executing function. Although not illustrated except for the element 66, the present embodiment is likely provided with the program elements 61 through 70 as illustrated in Fig.8 further, in addition thereto the present embodiment further includes an area judgement processing means 83, an area information reading-in means 84 and a telecommunication means 85 as program contents.

Hereinbelow, only the newly added program contents are explained.

In the navigation system according to the present embodiment, the transmitter and receiver unit of a moving body likely receives a traffic information and/or an information belonging thereto transmitted from an external stationary station, further in this instance, to the traffic information transmitted from the external stationary station an information informing a stationary station controlling a neighboring area is added.

When the moving body, in that the motor vehicle moves into the neighboring area from the area controlled by the current stationary station, the newly added program contents are designed to tune the stationary station controlling the neighboring area based on the information informing the stationary station controlling the neighboring area and to receive the traffic information and/or the information belonging thereto and a variety of application programs for processing the information.

It is assumed that the information from the stationary station of the neighboring area is a telephone number, and the transmitter and receiver unit is a moving body telephone. Fig.10 shows an example of a neighboring area 81 and a stationary station information 82 thereof. The neighboring area 81 in a neighboring information 80 is a border information in connection with a neighboring area, and the stationary station information 82 is a telephone number of the corresponding stationary station.

Namely, in the present embodiment, when a motor vehicle moves over the area of which current traffic information is provided, a new stationary station is determined based on the stationary station information 82 of the area neighboring the current area. The content of the application program is designed so that the area judgement processing means 83 judges an area where the motor vehicle is currently located based on the current position information obtained by the current position calculating means 66 and the neighboring information 80. When the judgement result indicates that the motor vehicle moves over the area controlled by a formerly stationary station, the telecommunicating means 84 begins telecommunication with the stationary station designated by the stationary station information 82. In the present embodiment a processing of calling the stationary station by the moving body telephone is performed by the telecommunication means 84.

The telecommunication means 84 can be modified to issue an information request command from the side of a moving body, in that a motor vehicle, to a stationary station concerned and to receive a necessary information such as a traffic information.

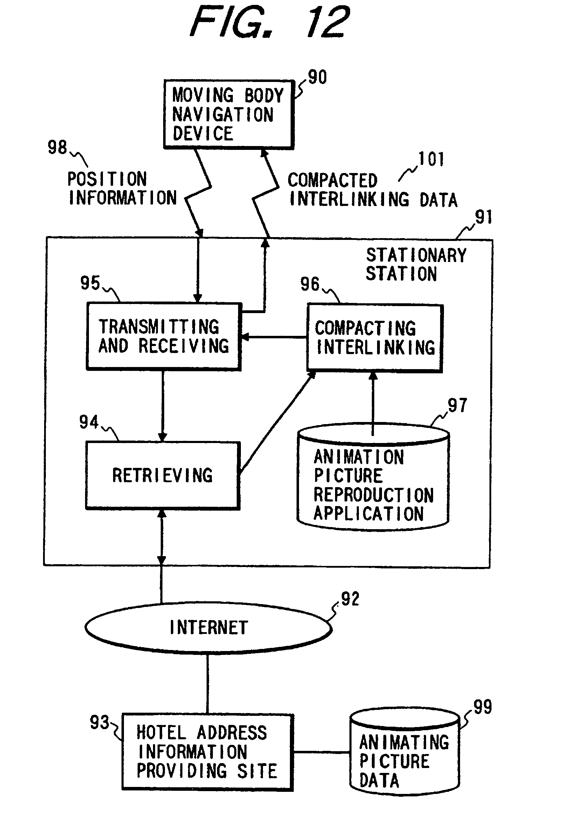

Figs.11 and 12 are diagrams for explaining navigation systems in which further expanded functions are added to the navigation system as explained above.

In the present embodiment, a stationary station 91 is connected to an internet 92 as illustrated in Fig.11, and when a desired information request is generated from a moving body navigation device 90, the stationary station 91 retrieves the requested information from the internet 92 and provides the obtained information together with application programs necessary for processing the same to the moving body navigation device 90.

For example, when a command requesting a hotel address information near the current position together with current position information is transmitted to the stationary satation 91, the stationary station 91 retrieves a suitable information among a hotel address information providing site 93 in the internet 92 and provides the obtained accommodation information in a form of animating picture data 99.

Fig.12 shows a constitutional structure of a stationary station which is designed to be able to utilize an internet information.

The stationary station 91 includes a retrieving means 94, a transmitter and receiver means 95, a compacting and interlinking means 96 of a traffic information and application program, and an animation data reproduction application program 97.

The stationary station 19 obtains the animating picture data 99 in which an accommodation information compiled from the hotel address information providing site 93 via the retrieving means 94 based on the position information transmitted from the moving body navigation device 90. The animation picture data 99 and the animation picture data reproduction application program 97 are compacted and interlinked by the compacting and interlinking means 96, and are transmitted by the transmitter and receiver means 95 to the moving body navigation device 90. The moving body navigation device 90 receives the compacted and interlinked data 101, expands and separates the same based on the previous embodiment as explained above, executes the animation picture data reproduction application program 97 and reproduces the animation picture data 99.

According to the present embodiment, without necessitating provision of the animation picture data application program in the navigation device which was conventionally required, such application program can be newly obtained via the telecommunication and the new animation picture information can be displayed on the display in the navigation device, moreover a variety of information can be displayed by making use of the already existing internet.

## Claims

1. Navigation system comprising:
an information processing unit (1),
a display (2) mounted on a moving body for displaying a traffic information including a map information and a position information of the moving body,
a telecommunication unit (10) which receives data including traffic information from an external stationary station, and
a memory (23) which stores an application program for processing the traffic information;
**characterized in that** the navigation system further comprises,
a separator (52) which obtains from the received data a partial application program provided as a program part of the application program for processing the traffic information; and
a converter (51) which partially replaces and supplements the application program stored in the memory (23) by making use of said partial application program.

2. Navigation system according to claim 1 **characterized in that** at least one format of the traffic information and an information relating thereto to be inputted to the information processing unit (1) is standardized between different types of navigation systems;
the separator (52) separates from the data, when modification and supplementing of the format is effected, the partial application program which is provided as a part of the application program and is written in an intermediate code for processing the modified and supplemented format, and
the converter (51) includes a program translator which reads in the partial application program written in the intermediate code standardized between different types of navigation systems and converts the same into an application program inherent to the navigation system, and partially replaces and supplements the application program with the application program inherent to the navigation system and converted by the program translator.

3. Navigation system according to claim 1 or claim 2, wherein the information medium is at least one of a CD-ROM, an IC card and a telecommunication transmitted from an external stationary station, and the information medium contains a first information relating to a partial modification and supplementing of a format for the traffic information and/or an information belonging thereto and a partial application program serving as a program part which is necessary for the processing of the modification and supplementing.

4. Navigation system according to one of claims 1 through claim 3, wherein the moving body is provided with a telecommunication unit into which a traffic information and/or an information belonging thereto transmitted from an external stationary station is inputted, the traffic information to be transmitted from the external stationary station is added of an information informing an external stationary station controlling over a neighborubg area and when the moving body moves from an area controlled by a current external stationary station into the neighboring area, the moving body is adapted to tune into the external stationary station controlling over the neighboring area and to receive a traffic information and/or an information belonging thereto and a variety of application programs necessary for processing these informations based on the information informing the external stationary station controlling over the neighboring area.

5. Navigation system according to claim 3 or claim 4, wherein the external stationary stations are connected to an internet, when a desired information request is generated from said moving body, the external stationary station retrieves the requested information from the internet and provides an obtained information together with an application program necessary for processing the obtained information to the moving body.

6. Information medium used for a navigation system according to claim 1 **characterized in that** the information medium is constituted to contain an information relating to a partial modification and supplementing of at least one format of a traffic information and an information belonging thereto written in a standardized format between different types of navigation devices in combination with a partial application program written in an intermediate code standardized between the different navigation devices serving as a program part which is necessary for processing at least partially modified or updated information of traffic information contained in the same information medium, said partial application program to be used by said navigation system for partially replacing and supplementing a stored application program.

## Patentansprüche

1. Navigationssystem enthaltend:
eine Informationsverarbeitungseinheit (1),
eine Anzeige (2), die auf einem beweglichen Körper, zum Anzeigen von Verkehrsinformationen, die eine Karteninformation und eine Positionsinformation des beweglichen Körpers aufweisen, montiert ist,
eine Telekommunikationseinheit (10), welche Daten empfängt, die Verkehrsinformationen von einer externen stationären Station aufweisen, und
einen Speicher (23), der ein Anwendungsprogramm zur Verarbeitung der Verkehrsinformationen speichert,
**dadurch gekennzeichnet, dass**
das Navigationssystem weiter enthält,
eine Trenneinrichtung (52), die aus den empfangenen Daten ein teilweises Anwendungsprogramm erhält, welches als ein Programmteil des Anwendungsprogramms zur Verarbeitung der Verkehrsinformationen bereitgestellt wird, und
einen Umsetzer (51), der das in dem Speicher (23) gespeicherte Anwendungsprogramm, unter Verwendung des teilweisen Anwendungsprogramms, teilweise ersetzt und ergänzt.

2. Navigationssystem nach Anspruch 1,
**dadurch gekennzeichnet, dass**
mindestens ein Format der Verkehrsinformationen oder einer sich darauf beziehenden Information die in die Informationsverarbeitungseinheit (1) eingegeben werden zwischen verschiedenen Arten von Navigationssystemen standardisiert ist, die Trenneinrichtung (52) das teilweise Anwendungsprogramm, das als ein Teil des Anwendungsprogramms bereitgestellt wird und in einem Zwischencode zur Verarbeitung des veränderten und ergänzten Formats geschrieben wurde, von den Daten trennt, wenn eine Veränderung und Ergänzung des Formats durchgeführt wird, und
der Umsetzer (51) einen Programmübersetzer aufweist, der das teilweise Anwendungsprogramm, welches in dem zwischen verschiedenen Arten von Navigationssystemen standardisieren Zwischencode geschrieben wurde, einliest und dasselbe in ein dem Navigationssystem zugehörigen Anwendungsprogramm umsetzt, und das Anwendungsprogramm teilweise mit dem Anwendungsprogramm ersetzt und ergänzt, das zu dem Navigationssystem gehört und durch den Programmübersetzer umgewandelt wurde.

3. Navigationssystem nach Anspruch 1 oder Anspruch 2, wobei das Informationsmedium mindestens eine CD-ROM, eine IC-Karte oder eine von einer externen stationären Station übermittelte Nachricht ist, und wobei das Informationsmedium eine erste Information enthält, welche sich auf eine teilweise Veränderung und Ergänzung eines Formats für die Verkehrsinformationen und / oder einer dazugehörigen Information bezieht und ein teilweises Anwendungsprogramm enthält, welches als ein Programmteil dient, der zur Verarbeitung der Veränderungen und Ergänzungen notwendig ist.

4. Navigationssystem nach einem der Ansprüche 1 bis 3, wobei der bewegliche Körper mit einer Telekommunikationseinheit versehen ist, in die eine Verkehrsinformation und / oder eine dazugehörige Information eingegeben wird, welche von einer externen stationären Station übermittelt wurde, wobei die von der externen stationären Station zu übertragene Verkehrsinformation einer Information hinzugefügt wird, die eine externe stationäre Station, welche ein Nachbarschaftsgebiet kontrolliert informiert, und wenn der bewegliche Körper sich von einem Gebiet, das durch eine gegenwärtige externe stationäre Station kontrolliert wird in ein Nachbarschaftsgebiet bewegt, wird der bewegliche Körper dazu angepasst die externe stationäre Station, welche das Nachbarschaftsgebiet überwacht, zu empfangen und eine Verkehrsinformation und / oder eine dazugehörige Information und verschiedene Anwendungsprogramme, welche zur Verarbeitung dieser Informationen notwendig sind, die auf den Informationen, welche die externe stationäre Station, die das Nachbarschaftsgebiet steuert informiert basieren.

5. Navigationssystem nach Anspruch 3 oder Anspruch 4, wobei die externen stationären Stationen mit einem Internet verbunden sind, wobei wenn eine gewünschte Informationsanfrage von dem beweglichen Körper erzeugt wird, erhält die externe stationäre Station die angefragten Informationen aus dem Internet und stellt eine erhaltene Information zusammen mit einem Anwendungsprogramm, welches zur Verarbeitung der erhaltenen Information notwendig ist, dem beweglichen Körper bereit.

6. Informationsmedium zur Verwendung in einem Navigationssystem nach Anspruch 1, **dadurch gekennzeichnet, dass** das Informationsmedium ausgebildet ist, um eine Information zu enthalten, welche sich auf teilweise Veränderungen und Ergänzungen von mindestens einem Format der Verkehrsinformationen oder einer dazugehörigen Information bezieht, die in einem zwischen verschiedenen Arten von Navigationsgeräten standardisierten Format in Kombination mit einem teilweisen Anwendungsprogramm, welches in einem zwischen den verschiedenen Navigationsgeräten standardisierten Zwischencode geschrieben ist, als ein Programmteil dient, der zur Verarbeitung von mindestens teilweise veränderten oder aktualisierten Informationen von Verkehrsinformationen, welche in dem gleichen Informationsmedium enthalten sind, notwendig ist, wobei das teilweise Anwendungsprogramm durch das Navigationssystem zum teilweisen Ersetzen und Ergänzen eines gespeicherten Anwendungsprogramms verwendet wird.

## Revendications

1. Un système de navigation comprenant :
une unité de traitement des informations (1),
un affichage (2) monté sur un engin mobile permettant d'afficher des informations routières, notamment des informations cartographiques et des informations concernant la position de l'engin mobile,
une unité de télécommunication (10) qui reçoit des données comprenant des informations routières provenant d'une station fixe externe ;
une mémoire (23) qui stocke un programme d'application permettant de traiter les informations routières ;
**caractérisé en ce que** le système de navigation comprend en outre
un séparateur (52) qui sépare des données reçues un programme d'application partiel fourni comme une partie de programme du programme d'application permettant de traiter les informations routières ; et
un convertisseur (51) qui remplace partiellement et complète le programme d'application stocké dans la mémoire (23) en utilisant ledit programme d'application partiel.

2. Un système de navigation selon la revendication 1 **caractérisé en ce qu'**au moins un format des informations routières et des informations relatives à celles-ci devant être entré dans l'unité de traitement des informations (1) est standardisé entre différents types de systèmes de navigation ;
le séparateur (52) sépare des données, lorsque la modification et le complément du format est effectué, le programme d'application partiel qui est fourni comme une partie du programme d'application et qui est écrit dans un code intermédiaire permettant de traiter le format modifié et complété, et
le convertisseur (51) inclut un traducteur de programme qui lit le programme d'application partiel écrit dans le code intermédiaire standardisé entre les différents types de systèmes de navigation et le convertit en un programme d'application inhérent au système de navigation, et remplace partiellement et complète le programme d'application avec le programme d'application inhérent au système de navigation et converti par le traducteur de programme.

3. Le système de navigation selon la revendication 1 ou la revendication 2, dans lequel le support d'information est soit un CD-ROM, soit une carte à circuit intégré, soit une télécommunication transmise à partir d'une station fixe externe, et le support d'information contient une première information relative à une modification partielle et un complètement d'un format pour les informations routières et/ou les informations relatives à celles-ci et un programme d'application partiel faisant office de partie de programme qui est nécessaire pour le traitement de la modification et du complément.

4. Un système de navigation selon l'une des revendications 1 à 3, dans lequel l'engin mobile est équipé d'une unité de télécommunication dans laquelle sont entrées des informations routières et/ou des informations relatives à celles-ci transmises à partir d'une station fixe externe, les informations routières devant être transmises à partir de la station fixe externe sont accompagnées d'une information informant une station fixe externe contrôlant une zone voisine et lorsque l'engin mobile se déplace à partir d'une zone contrôlée par une station fixe externe présente vers la zone voisine, l'engin mobile est adapté pour être réglé sur la station fixe externe contrôlant la zone voisine et pour recevoir des informations routières et/ou des informations relatives à celles-ci et divers programmes d'application nécessaires pour traiter ces informations basées sur les informations informant la station fixe externe contrôlant la zone voisine.

5. Le système de navigation selon la revendication 3 ou la revendication 4, dans lequel les stations fixes externes sont connectées à un interréseau, lorsqu'une demande d'information désirée est générée par ledit engin mobile, la station fixe externe extrait les informations demandées de l'interréseau et fournit les informations obtenues, ainsi qu'un programme d'application nécessaire pour traiter les informations obtenues, à l'engin mobile.

6. Le support d'information utilisé pour un système de navigation selon la revendication 1, **caractérisé en ce que** le support d'information est constitué de manière à contenir des informations concernant une modification partielle et un complément d'au moins un format d'informations routières et d'informations relatives à celles-ci écrit dans un format standardisé entre différents types de dispositifs de navigation en combinaison avec un programme d'application partiel écrit dans un code intermédiaire standardisé entre les différents dispositifs de navigation faisant office de partie de programme qui est nécessaire pour traiter au moins les informations partiellement modifiées ou mises à jour des informations routières contenues dans le même support d'information, ledit programme d'application partiel devant être utilisé par ledit système de navigation pour remplacer partiellement et compléter un programme d'application stocké.
